# EUROPEAN PATENT SPECIFICATION

(11) **EP 2 679 476 B1**
(45) Date of publication and mention of the grant of the patent: **01.06.2016**
(21) Application number: 13160600.6
(22) Date of filing: 22.03.2013
(51) Int. Cl.: B62J 35/00, B62K 19/46, B62K 11/10

(54) **Motorcycle**
Motorrad
Motocyclette

(30) Priority: 29.06.2012 JP 2012147617
(43) Date of publication of application: 01.01.2014
(73) Proprietor: Yamaha Hatsudoki Kabushiki Kaisha, Iwata-shi, Shizuoka 438-8501 (JP)
(72) Inventor: Nagaoka, Masaki, Iwata-shi, Shizuoka 438-8501 (JP); Sekiguchi, Takuro, Iwta-shi, Shizuoka 438-8501 (JP); Fukushima, Takaaki, Iwata-shi, Shizuoka 438-8501 (JP)
(74) Representative: Grünecker Patent- und Rechtsanwälte PartG mbB

(56) References cited:
- EP-A2- 2 457 814
- JP-A- H02 158 477
- JP-A- 2006 096 203

## Description

The present invention relates to a motorcycle according to the preamble of independent claim 1.

Such a motorcycle can be taken from the prior art document EP 2 457 814 A2. Said document discloses a recess that extends along the entire front portion of the fuel tank in the vehicle-width direction.

The prior art document JP 2006-096203 A discloses a motorcycle with a head pipe, a body frame having a main frame extending rearward and obliquely downward from the head pipe. A seat is supported by the body frame. A storage box, at least a portion of which is disposed between the seat and the main frame, is adapted to accommodate a helmet. A fuel tank is disposed below the seat and behind the storage box. A rear wheel is disposed below the fuel tank. The storage box has a front wall, a right wall extending rearward from a rightmost end of the front wall, a left wall extending rearward from a leftmost end of the front wall, and a rear wall connecting the right wall and the left wall to each other. The storage box has an opening formed by an upper edge of the front wall, an upper edge of the right wall, an upper edge of the rear wall, and an upper edge of the left wall. A rightmost end of the rear wall is positioned more rightward than the rightmost end of the front wall. A leftmost end of the rear wall is positioned more leftward than the leftmost end of the front wall. At least a portion of a front end portion of the fuel tank is positioned higher than at least a portion of the rear wall. The front end portion of the fuel tank has a recessed portion recessed rearward in a vehicle-widthwise central region. The front end portion of the fuel tank includes a leftward positioned portion and a rightward positioned portion having respective frontmost ends and respectively positioned vehicle-widthwise leftward and rightward of the recessed portion, and the respective frontmost ends of the leftward and rightward positioned portions are positioned more frontward than a rearmost end of the recessed portion. Said leftward positioned portion and said rightward positioned portion of the front end portion of the fuel tank overlap the recessed portion in side view of the motorcycle.

Conventionally, what is called an underbone type motorcycle is known. The underbone type motorcycle is equipped with a head pipe for pivotably supporting a handlebar, and a body frame having a main frame extending rearward and obliquely downward from the head pipe, and an engine is disposed below the body frame. In the underbone type motorcycle, the height of the portion between the handlebar and the seat is set low, so that space is formed in front of the seat. As a result, when riding on the motorcycle, the rider can easily straddle over the main frame, so the rider can easily mount on and dismount from the motorcycle. JP 3449702 describes an underbone type motorcycle in which a storage box and a fuel tank are disposed below the seat.

When the storage box has a larger volumetric capacity, it can accommodate more items therein. However, it is not easy to enlarge the volumetric capacity of the storage box in the underbone type motorcycle. In the underbone type motorcycle, space is formed in front of the seat, as mentioned above, and the main frame extends frontward and obliquely upward from below the storage box. If the storage box is elongated frontward in order to increase its volumetric capacity, the storage box and the main frame may interfere with each other, so it is difficult to enlarge the storage box frontward. Moreover, in the underbone type motorcycle, it is not easy to change the shape of the main frame in order to increase the volumetric capacity of the storage box because the engine is supported non-swingably on the main frame. Furthermore, the fuel tank is disposed at the rear of the storage box. This means that, if the storage box is elongated rearward, either the volumetric capacity of the fuel tank may decrease, or the size of the vehicle body may increase because the fuel tank needs to be disposed further rearward. Thus, it has been believed that it is difficult to further increase the storage space below the seat.

The present invention has been accomplished in view of the foregoing and other problems, and it is an object of the invention to provide a motorcycle that can effectively ensure sufficient storage space and at the same time inhibit the capacity of the fuel tank from decreasing.

According to the present invention said object is solved by a motorcycle having the features of independent claim 1. Preferred embodiments are laid down in the dependent claims.

According to the present teaching it is provided a motorcycle that can effectively ensure sufficient storage space and at the same time inhibit the capacity of the fuel tank from decreasing. In particular, it is provided a motorcycle comprising: a head pipe; a body frame having a main frame extending rearward and obliquely downward from the head pipe; an engine supported non-swingably on the main frame and disposed below the main frame; a seat supported by the body frame; a storage box, at least a portion of which is disposed between the seat and the main frame; a fuel tank disposed below the seat and behind the storage box; and a rear wheel disposed below the fuel tank, wherein: the storage box has a front wall, a right wall extending rearward from a rightmost end of the front wall, a left wall extending rearward from a leftmost end of the front wall, and a rear wall connecting the right wall and the left wall to each other; the storage box has an opening formed by an upper edge of the front wall, an upper edge of the right wall, an upper edge of the rear wall, and an upper edge of the left wall; a rightmost end of the rear wall is positioned more rightward than the rightmost end of the front wall; a leftmost end of the rear wall is positioned more leftward than the leftmost end of the front wall; at least a portion of a front end portion of the fuel tank is positioned more upward than at least a portion of the rear wall; the front end portion of the fuel tank has a recessed portion recessed rearward in a vehicle-widthwise central region; and the front end portion of the fuel tank includes a leftward positioned portion and a rightward positioned portion having respective frontmost ends and respectively positioned vehicle-widthwise leftward and rightward of the recessed portion, and the respective frontmost ends of the leftward and rightward positioned portions are positioned more frontward than a rearmost end of the recessed portion.

In the motorcycle according to the present teaching, the rightmost and leftmost ends of the rear wall of the storage box are respectively positioned more outward than the rightmost and leftmost ends of the front wall. The recessed portion recessed rearward is formed in the vehicle-widthwise central region in the upper portion of the front end portion of the fuel tank, which is disposed behind the storage box. Thereby, the storage space is increased corresponding to the space of the recessed portion. The respective frontmost ends of the leftward and rightward positioned portions, which are respectively positioned vehicle-widthwise leftward and rightward of the recessed portion, are positioned more frontward than the rearmost end of the recessed portion. Therefore, the fuel tank can be ensured to have a sufficient capacity even though the recessed portion is formed in the fuel tank. Thus, the above-described underbone type motorcycle can effectively increase the storage space below the seat while inhibiting the capacity of the fuel tank from decreasing.

In one embodiment of the present teaching, the rearmost end of the rear wall is disposed more rearward than the rearmost end of the right wall and the rearmost end of the left wall, and more rearward than the respective frontmost ends of the leftward and rightward positioned portions respectively positioned vehicle-widthwise leftward and rightward of the recessed portion.

Thereby, the volumetric capacity of the storage box can be made larger without increasing the size of the vehicle.

In one embodiment of the present teaching, the upper edge of the rear wall is formed in a circular arc shape as viewed in plan; and the rearmost end of the rear wall is disposed more rearward than the rearmost end of the right wall and the rearmost end of the left wall, and more rearward than the respective frontmost ends of the leftward and rightward positioned portions respectively positioned vehicle-widthwise leftward and rightward of the recessed portion.

Thereby, the volumetric capacity of the storage box can be made larger without increasing the size of the vehicle.

In one embodiment of the present teaching, the rear wall has a flange portion extending rearward and obliquely upward; the recessed portion is formed in an upper portion of the front end portion of the fuel tank; and at least a portion of the flange portion is disposed more rearward than the respective frontmost ends of the leftward and rightward positioned portions respectively positioned vehicle-widthwise leftward and rightward of the recessed portion, and overlaps the fuel tank as viewed in plan.

Since the recessed portion is formed in an upper portion of the front end portion of the fuel tank in this way, the capacity of the fuel tank can be inhibited from decreasing. Moreover, since the flange portion is disposed in the recessed portion, the items accommodated in the storage box can be effectively prevented from making contact with the fuel tank.

In one embodiment of the present teaching, the flange portion is inclined with respect to the vertical so as to slope upward toward the rear; and a surface of the recessed portion is inclined with respect to the vertical so as to slope upward toward the rear.

Since the surface of the recessed portion is inclined with respect to the vertical so as to slope upward toward the rear in this way, the capacity of the fuel tank can be further inhibited from decreasing.

In one embodiment of the present teaching, an uppermost end of the rear wall is positioned higher than an uppermost end of the right wall and an uppermost end of the left wall; and the upper edge of the rear wall is formed so as to slope downward from the uppermost end of the rear wall toward the uppermost end of the right wall and the uppermost end of the left wall.

Since the upper edge of the rear wall is formed so as to slope downward from the uppermost end of the rear wall toward the uppermost end of the right wall and the uppermost end of the left wall in this way, water can be effectively prevented from entering the storage box by the rear wall extending higher than the uppermost ends and of the right wall and the left wall when water flows in from behind the storage box.

In one embodiment of the present teaching, the left wall has a left wall main portion and a left wall bulging portion, the left wall main portion formed to have a horizontal cross section in a linear shape or in a leftward convex curved shape, and the left wall bulging portion provided more rearward than a frontmost end of the left wall main portion and more frontward than a rearmost end thereof and formed to have a horizontal cross section in a leftward convex curved shape having a greater curvature than that of the left wall main portion; and the right wall has a right wall main portion and a right wall bulging portion, the right wall main portion formed to have a horizontal cross section in a linear shape or in a rightward convex curved shape, and the right wall bulging portion provided more rearward than a frontmost end of the right wall main portion and more frontward than a rearmost end thereof and formed to have a horizontal cross section in a rightward convex curved shape having a greater curvature than that of the right wall main portion.

The volumetric capacity of the storage can be made larger because the left wall bulging portion and the right wall bulging portion, which are respective portions of the left wall and the right wall, bulge vehicle-widthwise outward in this way.

In one embodiment of the present teaching, an indented portion recessed upward is formed in a region of a reverse face of the seat that faces the rear wall and the recessed portion.

Since the indented portion is formed in the reverse face of the seat in this way, sufficient storage space can be provided from a region above the rear wall of the storage box toward a region above the recessed portion of the fuel tank.

In one embodiment of the present teaching, the motorcycle further has a rear fender disposed above a portion of the rear wheel, and a recessed portion recessed upward and positioned above a portion of the rear fender is formed in a lower portion of the rear wall of the storage box.

By disposing a portion of the rear fender in the recessed portion of the storage box, the front-to-rear length of the vehicle can be made smaller, and the size of the motorcycle can be made smaller.

In the motorcycle according to the present teaching, when a helmet is accommodated in the storage box in such a posture that a top portion of a shell portion of the helmet faces downward and a peak of the helmet faces rearward, the recessed portion of the fuel tank is formed so that at least a portion of the peak of the helmet is adapted to be disposed above the recessed portion as viewed in plan.

Even when the storage box has a volumetric capacity that can accommodate the shell portion of the helmet (for example, an open-face type helmet) but the whole of the helmet is difficult to put in the storage box, the helmet can be accommodated in the storage space below the seat by putting the peak of the helmet in the recessed portion, because the recessed portion is formed in the front end portion of the fuel tank.

In one embodiment of the present teaching, a fuel pump is disposed in the fuel tank, and the fuel pump is mounted to a lower wall of the fuel tank.

As a result, the fuel pump can be disposed in a compact manner.

In one embodiment of the present teaching, the body frame comprises right and left seat frames extending rearward and obliquely upward from the main frame and a cross member mounted so as to span over the right and left seat frames; the seat frame is provided with a first mount portion to which the storage box is mounted; the cross member is provided with a second mount portion to which the fuel tank is mounted; the first mount portion is positioned more frontward than the second mount portion; and the storage box has a seat load bearing portion provided above the second mount portion.

When the storage box and the fuel tank are joined together (in other words, when both the storage box and the fuel tank are mounted to the same portion of the body frame), there is a risk that the height of the storage box may become higher at the portion where the storage box and the fuel tank overlap each other. On the other hand, when it is attempted to prevent the height of the storage box from becoming higher, the volumetric capacity of the storage box may be decreased. In particular, when the storage box and the fuel tank are disposed so as to overlap each other as viewed in plan, the just-mentioned problem becomes more evident. Nevertheless, in the present teaching, the storage box is mounted to the first mount portion of the seat frame, and the fuel tank is mounted to the second mount portion of the cross member. Since the first mount portion is positioned more frontward than the second mount portion, a sufficient volumetric capacity of the storage box can be provided without increasing the height of the storage box. Furthermore, because the storage box and the fuel tank can be disposed in a compact manner, the seat load bearing portion can be provided in the space above the second mount portion to which the fuel tank is fitted.

As described above, the present teaching makes it possible to provide a motorcycle that can effectively ensure sufficient storage space and at the same time inhibit the capacity of the fuel tank from decreasing.

### BRIEF DESCRIPTION OF DRAWINGS

[Fig. 1] Fig. 1 is a left side view illustrating a motorcycle according to one embodiment of the present teaching.
[Fig. 2] Fig. 2 is a plan view illustrating a portion of the motorcycle according to one embodiment of the present teaching.
[Fig. 3A] Fig. 3A is a cross-sectional view taken along line IIIA-IIIA in Fig. 2.
[Fig. 3B] Fig. 3B is a partially enlarged view of Fig. 3A.
[Fig. 4] Fig. 4 is a left side view illustrating a seat, a storage box, and a region therearound, of the motorcycle according to one embodiment of the present teaching.
[Fig. 5A] Fig. 5A is a cross-sectional view taken along line VA-VA in Fig. 4, which illustrates the structures of a right wall and a left wall of the storage box.
[Fig. 5B] Fig. 5B is a cross-sectional view taken along line VB-VB in Fig. 4, which illustrates the structures of the right wall and the left wall of the storage box.
[Fig. 5C] Fig. 5C is a cross-sectional view taken along line VC-VC in Fig. 4, which illustrates the structures of the right wall and the left wall of the storage box.
[Fig. 6A] Fig. 6A is a perspective view illustrating a fuel tank of the motorcycle according to one embodiment of the present teaching.
[Fig. 6B] Fig. 6B is a side view illustrating the fuel tank of the motorcycle according to one embodiment of the present teaching.
[Fig. 6C] Fig. 6C is a plan view illustrating the fuel tank of the motorcycle according to one embodiment of the present teaching.
[Fig. 7A] Fig. 7A is a plan view illustrating a storage box of the motorcycle according to one embodiment of the present teaching.
[Fig. 7B] Fig. 7B is a left side view illustrating the storage box of the motorcycle according to one embodiment of the present teaching.
[Fig. 7C] Fig. 7C is a front view illustrating the storage box of the motorcycle according to one embodiment of the present teaching.
[Fig. 7D] Fig. 7D is a rear view illustrating the storage box of the motorcycle according to one embodiment of the present teaching.
[Fig. 8] Fig. 8 is a perspective view illustrating a storage box and a region therearound, of the motorcycle according to one embodiment of the present teaching.
[Fig. 9] Fig. 9 is a left side view illustrating the storage box and a region therearound, of the motorcycle according to one embodiment of the present teaching.
[Fig. 10] Fig. 10 is a perspective view illustrating a storage box and a region therearound, of the motorcycle according to one embodiment of the present teaching.
[Fig. 11] Fig. 11 is a perspective view illustrating a storage box, a fuel tank, and a region therearound, of the motorcycle according to one embodiment of the present teaching.
[Fig. 12] Fig. 12 is a plan view illustrating a portion of the motorcycle according to another embodiment of the present teaching.
[Fig. 13] Fig. 13 is a cross-sectional view taken along line XIII-XIII in Fig. 12.

### DESCRIPTION OF EMBODIMENTS

### <FIRST EMBODIMENT>

Hereinbelow, one embodiment (the first embodiment) of the present teaching will be described. In the following description, the terms "front," "rear," "left," and "right" respectively refer to front, rear, left, and right of the motorcycle 1 as defined based on the perspective of the rider of the motorcycle 1. Reference characters F, Re, L, and R in the drawings indicate front, rear, left, and right, respectively. The terms "forward," "rearward," "leftward," and "rightward" respectively refer to the direction to the front, the rear, the left (side), and the right (side) of the motorcycle 1 as defined based on the perspective of the rider of the motorcycle 1. The terms "frontmost," and "rearmost," respectively refer to the longest distance in direction to the front or the rear, perpendicular to a plan that extends in width-wise direction of the motorcycle. The terms "leftmost" and "rightmost" respectively refer to the longest distance in direction to the left or the right, perpendicular to a plan that extends in longitudinal center direction of the motorcycle. The term "upward" refer to the vertical direction away from the road on which the motorcycle stands or drives. The term "downward," refer to the vertical direction to the road on which the motorcycle stands or drives. The terms "below", "bottom" and "lower" refers to the downward direction. The terms "above", "upper" and "higher" refers to the upward direction. The term "behind" refers to the rearward direction.

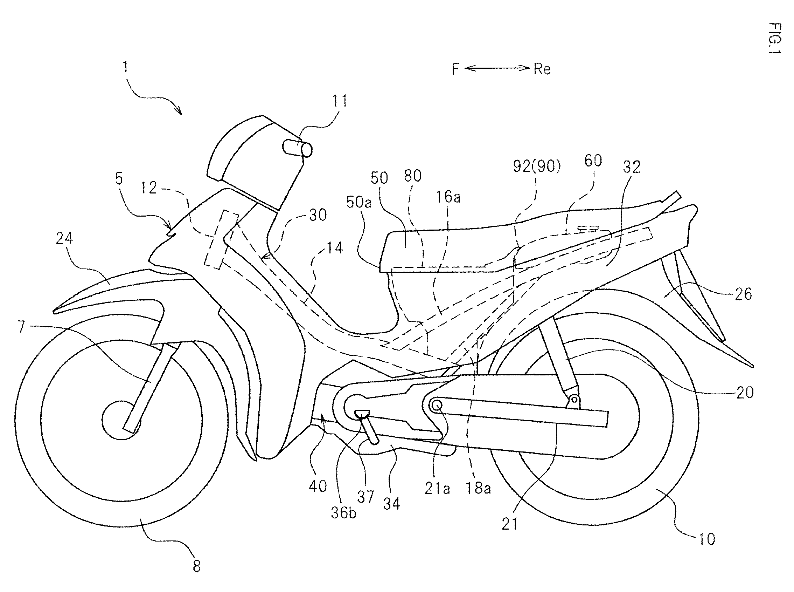

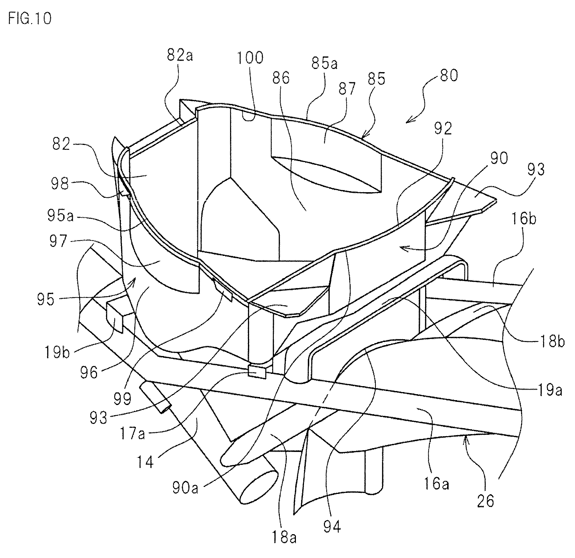

As illustrated in Fig. 1, a motorcycle according to the present embodiment is what is called an underbone type motorcycle 1. The motorcycle 1 has a vehicle body 5, a front wheel 8, a rear wheel 10, and an engine 40 for driving the rear wheel 10. The vehicle body 5 has a head pipe 12, a body frame 30, which comprises a plurality of frame members, and a seat 50, on which the rider is to be seated. The body frame 30 has a main frame 14 extending rearward and obliquely downward from the head pipe 12, a pair of left and right seat frames 16a and 16b (see Fig. 10) extending rearward and obliquely upward from an intermediate portion of the main frame 14, a pair of left and right backstays 18a and 18b (see Fig. 10) disposed at the rear of the seat frames 16a and 16b and extending rearward and obliquely upward from the main frame 14, and cross members 19a and 19b (see Fig. 10) mounted so as to span over the right and left seat frames 16a and 16b. The backstay 18a is connected to a rear end portion of the main frame 14 and an intermediate portion of the seat frame 16a. The backstay 18b is connected to a rear end portion of the main frame 14 and an intermediate portion of the seat frame 16b (see Fig. 10). A vehicle body cover 32 is mounted above and vehicle-widthwise outward of the body frame 30. The engine 40 is disposed below the main frame 14 and is supported non-swingably by the main frame 14. The seat 50 is supported by the seat frames 16a and 16b of the body frame 30.

A steering shaft, which is not shown in the drawings, is supported on the head pipe 12, and a handlebar 11 is provided on an upper portion of the steering shaft. A front fork 7 is provided on a lower portion of the steering shaft. A front wheel 8 is supported rotatably at the lower end of the front fork 7.

A rear cushion unit 20 is disposed below the seat frame 16a. An upper end portion of the rear cushion unit 20 is supported on the seat frame 16a, and a lower end portion of the rear cushion unit 20 is supported on a rear arm 21. A pivot shaft 21 a is provided in a front portion of the rear arm 21. The rear arm 21 can swing up and down about the pivot shaft 21 a. The rear wheel 10 is supported at a rear portion of the rear arm 21.

The motorcycle 1 has a front fender 24 disposed above a portion of the front wheel 8, and a rear fender 26 disposed above a portion of the rear wheel 10. The front fender 24 covers a portion of the front wheel 8. The rear fender 26 covers a portion of the rear wheel 10.

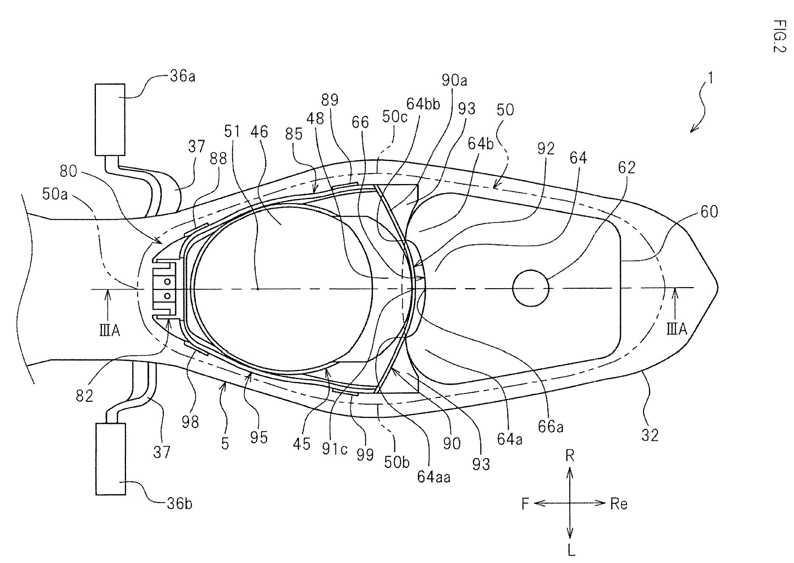

The engine 40 has a crankcase 34. A pair of left and right footrests 36a and 36b (see Fig. 2), on which the feet of the rider are put, are disposed to the left and right of the crankcase 34. The footrests 36a and 36b are fitted to the crankcase 34 via joining rods 37. As illustrated in Fig. 2, the footrests 36a and 36b are disposed more rearward than the head pipe 12 and more frontward than a frontmost end 50a of the seat 50. The footrest 36a is disposed vehicle-widthwise more rightward than a rightmost end 50c of the seat 50. The footrest 36b is disposed vehicle-widthwise more leftward than a leftmost end 50b of the seat 50.

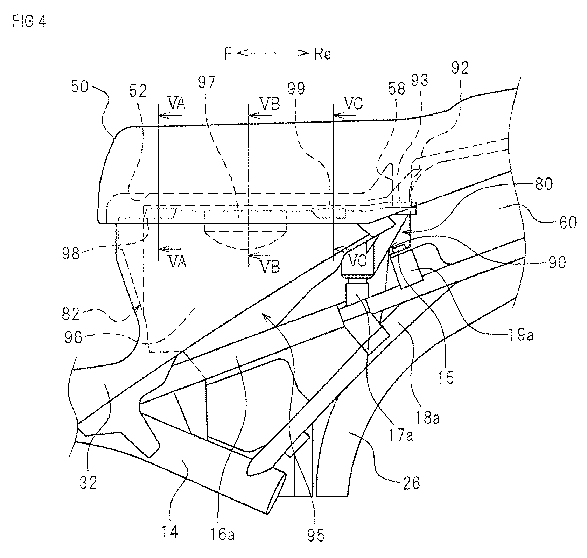

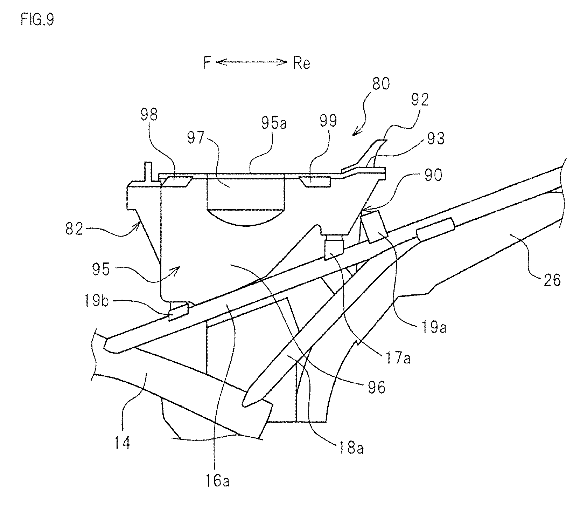

As illustrated in Fig. 1, a storage box 80 is disposed below the seat 50 and above the engine 40. As illustrated in Fig. 4, at least a portion of the storage box 80 is disposed between the seat 50 and the main frame 14. As illustrated in Fig. 10, the storage box 80 is supported on the cross members 19a and 19b. As illustrated in Fig. 9, the storage box 80 is fitted to a bracket 17a provided on the left seat frame 16a, a bracket (not shown) provided on the right seat frame 16b, and the cross member 19b, using bolts and nuts (not shown).

As illustrated in Fig. 1, a fuel tank 60 is disposed below the seat 50 and at the rear of the storage box 80. The rear wheel 10, which is supported on the rear arm 21, is disposed below the fuel tank 60. As illustrated in Fig. 4, the fuel tank 60 is fitted to the cross member 19a with the use of a bolt 15 and a nut, which is not shown. The bracket 17a is disposed in front of the cross member 19a. The mounting position of the storage box 80 and the mounting position of the fuel tank 60 are staggered from each other in a fore-and-aft direction of the motorcycle 1. The bracket 17a constitutes a first mount portion. The portion of the cross member 19a to which the fuel tank 60 is fitted constitutes a second mount portion. The first mount portion is positioned more frontward than the second mount portion.

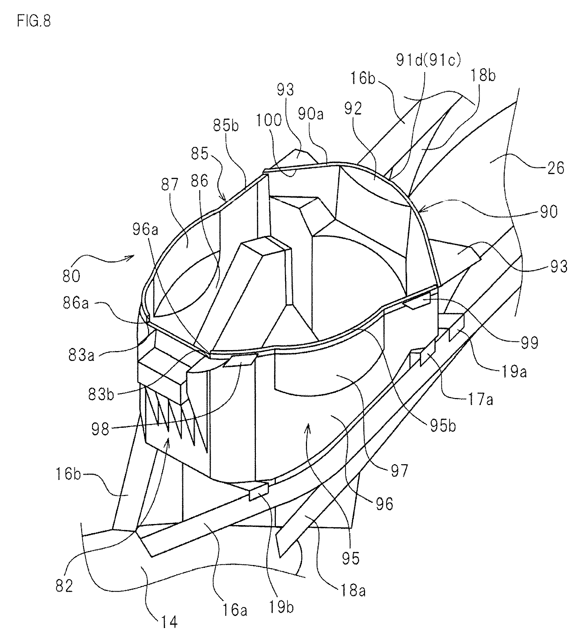

The seat 50 is configured to be pivotable about the front end portion of the seat 50. When the seat 50 is pivoted so that the rear end portion of the seat 50 moves frontward and obliquely upward, a later-described opening 100 (see Fig. 8) of the storage box 80 is exposed outside. The seat 50 is formed in such a shape that its width becomes narrower toward the front from the portion of the seat 50 at which its width is widest. The seat 50 is formed in such a shape that its width becomes narrower toward the rear from the portion of the seat 50 at which its width is widest. In the present embodiment, the portion of the seat 50 at which its width is widest is the portion connecting the rightmost end 50c and the leftmost end 50b of the seat 50 to each other.

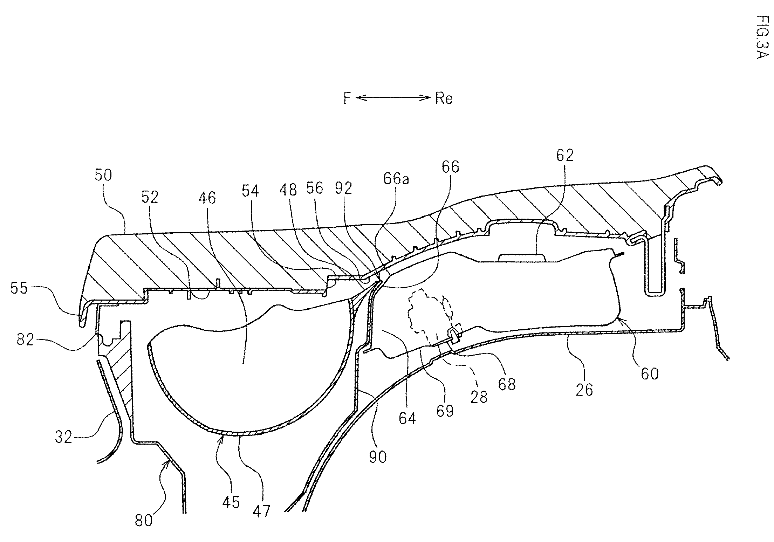

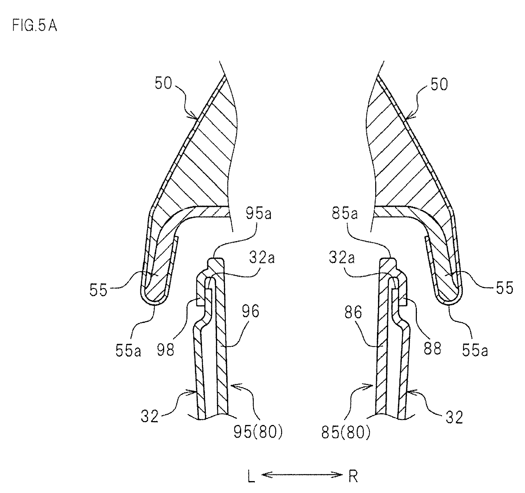

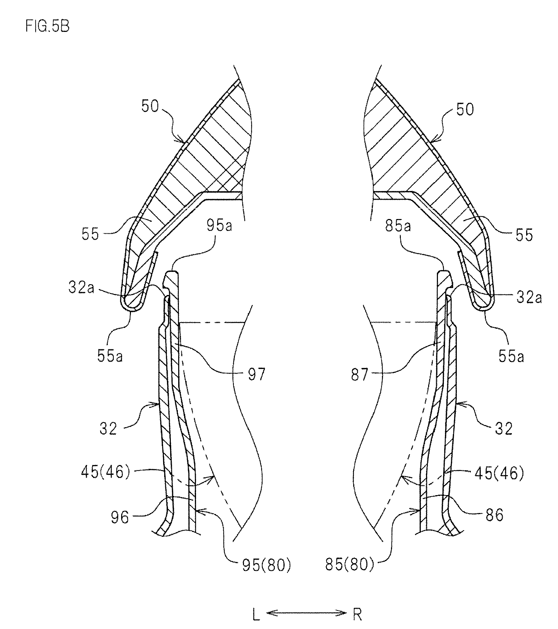

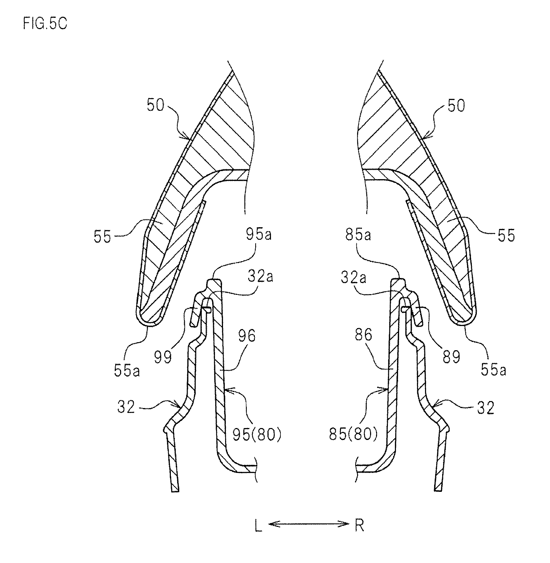

As illustrated in Fig. 3A, the seat 50 has a protruding portion 55 protruding downward from a reverse face 52 of the seat 50. The protruding portion 55 is formed along the entire circumference of the reverse face 52 of the seat 50. As illustrated in Fig. 5B, at least a portion of the protruding portion 55 is disposed outward of the storage box 80 and the vehicle body cover 32. The term "outward" herein means vehicle-widthwise outward. This applies throughout the following description unless otherwise stated. As illustrated in Fig. 5A, the lower end 55a of the protruding portion 55 is disposed lower than an upper edge 85a of a right wall 85 of the storage box 80. The lower end 55a of the protruding portion 55 is also disposed lower than an upper edge 95a of a left wall 95 of the storage box 80. As illustrated in Fig. 5C, the protruding portion 55 overlaps the upper edge 85a of the right wall 85 and an upper edge 32a of the vehicle body cover 32 as viewed from one side of the vehicle (viewed in the direction from the right to the left of Fig. 5C). The protruding portion 55 overlaps the upper edge 95a of the left wall 95 and the upper edge 32a of the vehicle body cover 32 as viewed from the other side of the vehicle (viewed in the direction from the left to the right of Fig. 5C).

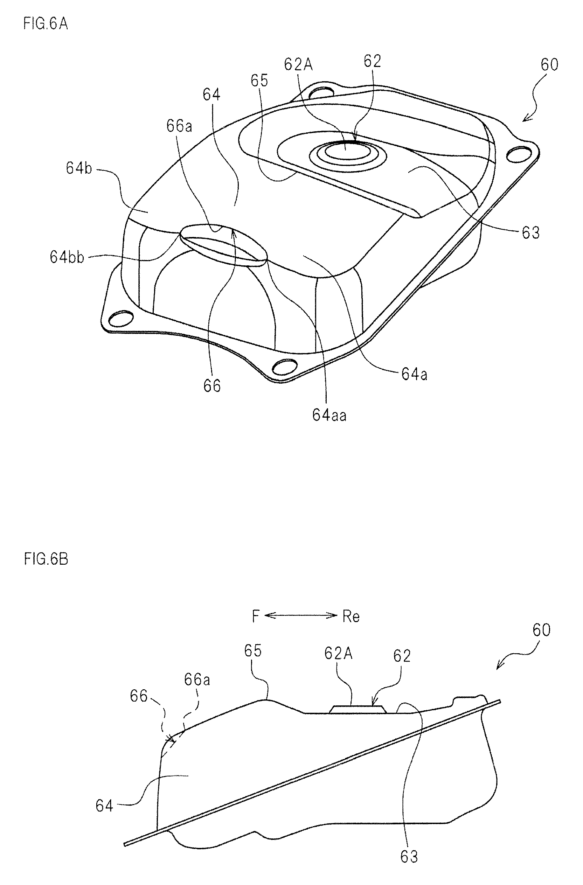

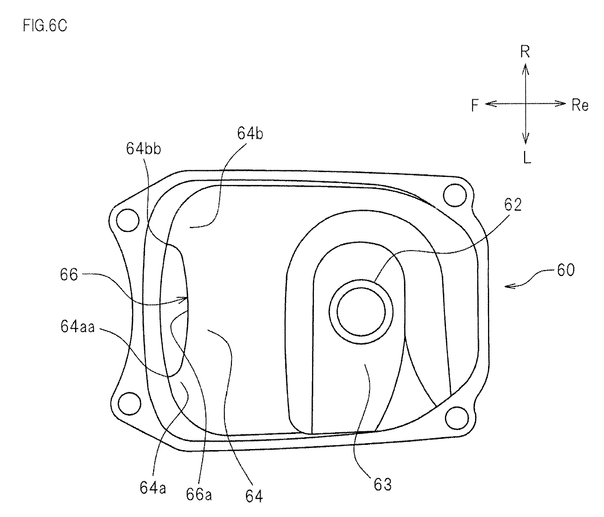

As illustrated in Fig. 6C, a recessed portion 66 recessed rearward is formed in a vehicle-widthwise central region (e.g., at the vehicle-widthwise center) in an upper portion of a front end portion 64 of the fuel tank 60. The front end portion 64 of the fuel tank 60 includes a leftward positioned portion 64a and a rightward positioned portion 64b. The leftward positioned portion 64a is positioned vehicle-widthwise leftward of the recessed portion 66. The rightward positioned portion 64b is positioned vehicle-widthwise rightward of the recessed portion 66. The leftward positioned portion 64a has a frontmost end 64aa. The rightward positioned portion 64b has a frontmost end64bb. The frontmost end 64aa is positioned more frontward than a rearmost end 66a of the recessed portion 66. The frontmost end 64bb is positioned more frontward than the rearmost end 66a of the recessed portion 66. As illustrated in Fig. 3A, the surface of the recessed portion 66 is inclined with respect to the vertical so as to slope upward toward the rear.

As illustrated in Fig. 6A, a tank cap 62 is provided on an upper portion of the fuel tank 60, rearward of the front end portion 64 of the fuel tank 60. The tank cap 62 covers a fuel inlet, not shown in the drawings, so that it can be opened/closed. As illustrated in Fig. 2, the tank cap 62 is disposed at a vehicle-widthwise central region. As viewed in plan, the vehicle center line overlaps the tank cap 62. As illustrated in Fig. 6B, an uppermost end 65 of the front end portion 64 of the fuel tank 60 is positioned higher than a surface 63 on which the tank cap 62 is provided. The uppermost end 65 of the front end portion 64 is positioned higher than an uppermost end 62A of the tank cap 62. As illustrated in Fig. 3A, an opening 68 is formed in a lower portion of the fuel tank 60. A fuel pump 28 is inserted in the opening 68 from below. The fuel pump 28 is mounted to a lower wall 69 of the fuel tank 60 and is disposed inside the fuel tank 60. A gap is provided between the upper wall of the fuel tank 60 and the uppermost end of the fuel pump 28. The fuel pump 28 is disposed inside the front-half portion of the fuel tank 60. The fuel pump 28 is inclined so as to slope forward toward the top. The recessed portion 66 is disposed more frontward than the fuel pump 28. The rearmost end 66a of the recessed portion 66 is positioned more frontward than the frontmost end of the fuel pump 28.

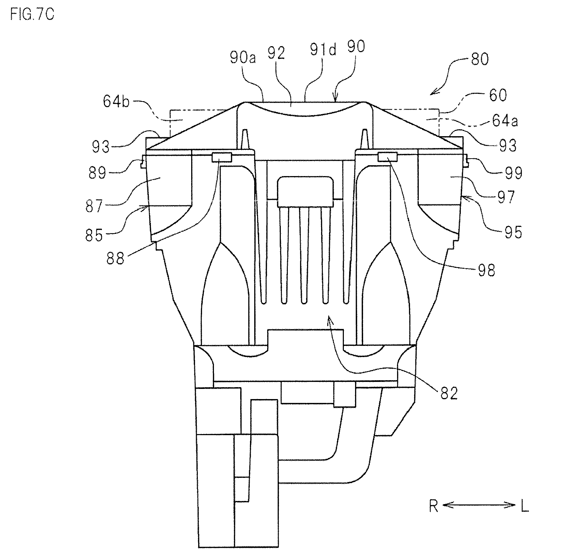

At least a portion of the front end portion 64 of the fuel tank 60 is positioned higher than a later-described rear wall 90 of the storage box 80. That is, in the present embodiment, the recessed portion 66 is a portion of the front end portion 64 of the fuel tank 60, but a front portion of the recessed portion 66 is positioned lower than the uppermost end of the rear wall 90 of the storage box 80, as illustrated in Fig. 3A. However, of the front end portion 64 of the fuel tank 60, at least a portion of the leftward positioned portion 64a, which is positioned vehicle-widthwise leftward of the recessed portion 66, and at least a portion of the rightward positioned portion 64b, which is positioned vehicle-widthwise rightward of the recessed portion 66, are positioned higher than the rear wall 90 of the storage box 80 (see Fig. 7C).

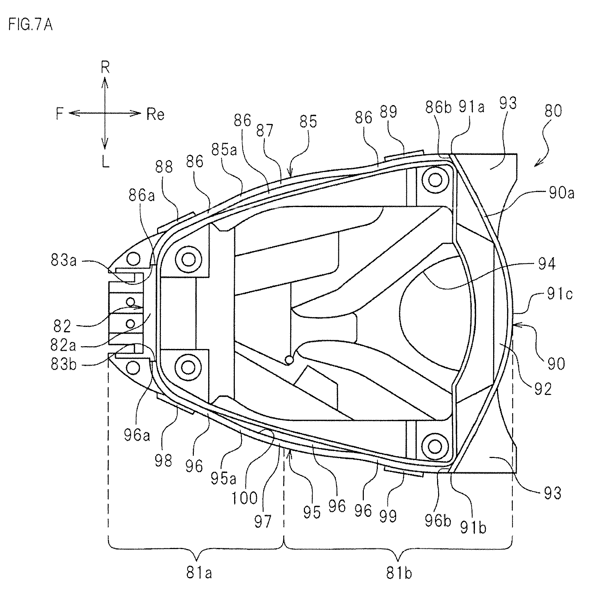

As illustrated in Fig. 7A, the storage box 80 has a front wall 82, a right wall 85 extending rearward from a rightmost end 83a of the front wall 82, a left wall 95 extending rearward from a leftmost end 83b of the front wall 82, and a rear wall 90 connecting the right wall 85 and the left wall 95 to each other. It should be noted that the phrase "extending rearward" here is intended to mean not just the cases in which a part or component extends rearward in a fore-and-aft direction in a strict sense but also the cases in which a part or component extends rearward in a direction inclined from the fore-and-aft direction. Moreover, it is not limited to the cases in which a part or component extends rearward straightly but also means to include the cases in which a part or component extends rearward forming a curve. The front wall 82, the right wall 85, the left wall 95, and the rear wall 90 constitute wall portions of the storage box 80. In the storage box 80, an opening 100 is formed by the upper edge 82a of the front wall 82, the upper edge 85a of the right wall 85, the upper edge 90a of the rear wall 90, and the upper edge 95a of the left wall 95.

A rightmost end 91 a of the rear wall 90 is positioned more rightward than the rightmost end 83a of the front wall 82. A leftmost end 91 b of the rear wall 90 is positioned more leftward than the leftmost end 83b of the front wall 82. The width (vehicle-widthwise length) of the rear wall 90 is longer than the width (vehicle-widthwise length) of the front wall 82.

As illustrated in Fig. 7A, the left wall 95 has a left wall main portion 96 and a left wall bulging portion 97. The left wall main portion 96 is formed to have a horizontal cross section in a leftward convex curved shape. The left wall bulging portion 97 is provided more rearward than the frontmost end 96a of the left wall main portion 96 and more frontward than the rearmost end 96b thereof. The left wall bulging portion 97 is formed to have a horizontal cross section in a leftward convex curved shape having a greater curvature than that of the left wall main portion 96. As illustrated in Fig. 5B, the curvature of the left wall bulging portion 97 is greater than the curvature of the left wall main portion 96. The left wall bulging portion 97 is positioned more outward than the left wall main portion 96. In the present embodiment, in a vehicle fore-and-aft central portion of the left wall 95, the left wall bulging portion 97 is provided in an upper portion of the left wall 95, and the left wall main portion 96 is provided in a lower portion of the left wall 95, as illustrated in Fig. 8. In the vehicle fore-and-aft central portion of the left wall 95, the left wall bulging portion 97 curves more leftward than the left wall main portion 96. Since the left wall bulging portion 97 does not have a later-described first interlocking portion 98 or a later-described second interlocking portion 99, the internal space can be enlarged leftward corresponding to the space for these interlocking portions 98 and 99. Thus, the vehicle-widthwise volumetric capacity of the storage box 80 can be increased.

As illustrated in Fig. 7A, the right wall 85 has a right wall main portion 86 and a right wall bulging portion 87. The right wall main portion 86 is formed to have a horizontal cross section in a rightward convex curved shape. The right wall bulging portion 87 is provided more rearward than the frontmost end 86a of the right wall main portion 86 and more frontward than the rearmost end 86b thereof. The right wall bulging portion 87 is formed to have a horizontal cross section in a rightward convex curved shape having a greater curvature than that of the right wall main portion 86. As illustrated in Fig. 5B, the curvature of the right wall bulging portion 87 is greater than the curvature of the right wall main portion 86. The right wall bulging portion 87 is positioned more outward than the right wall main portion 86. In the present embodiment, in a vehicle fore-and-aft central portion of the right wall 85, the right wall bulging portion 87 is provided in an upper portion of the right wall 85, and the right wall main portion 86 is provided in a lower portion of the right wall 85, as illustrated in Fig. 8. In the vehicle fore-and-aft central portion of the right wall 85, the right wall bulging portion 87 curves more rightward than the right wall main portion 86. Since the right wall bulging portion 87 does not have a later-described first interlocking portion 88 (see Fig. 7A) or a later-described second interlocking portion 89 (see Fig. 7A), the internal space can be enlarged rightward corresponding to the space for these interlocking portions 88 and 89. Thus, the vehicle-widthwise volumetric capacity of the storage box 80 can be increased. It should be noted that the left wall main portion 96 and the right wall main portion 86 may have a horizontal cross-section in a linear shape. In that case, the curvature of each of the left wall main portion 96 and the right wall main portion 86 is zero.

As illustrated in Fig. 7A, the upper edge 90a of the rear wall 90 of the present embodiment is formed in a circular arc shape, as viewed in plan. The upper edge 90a of the rear wall 90 curves toward the rear of the vehicle. The rearmost end 91c of the rear wall 90 is disposed more rearward than the rearmost end 86b of the right wall 85 and the rearmost end 96b of the left wall 95. As illustrated in Fig. 2, the rearmost end 91 c of the rear wall 90 is disposed more rearward than the respective frontmost ends 64aa and 64bb of the leftward and rightward positioned portions 64a and 64b, which are respectively positioned vehicle-widthwise leftward and rightward of the recessed portion 66. The rearmost end 91 c of the rear wall 90 is disposed in the recessed portion 66.

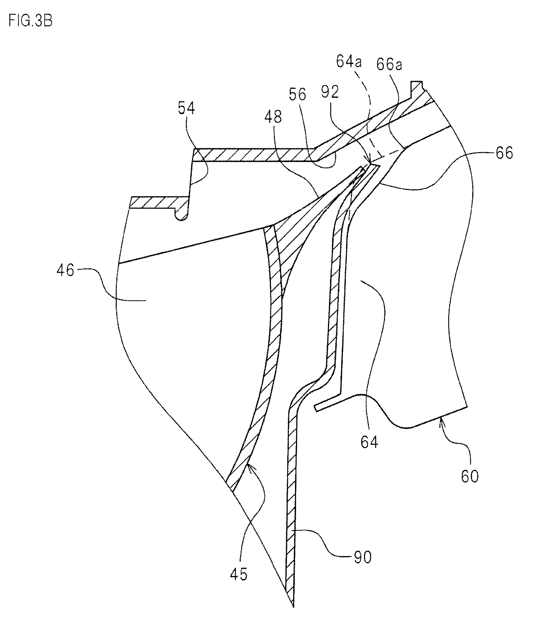

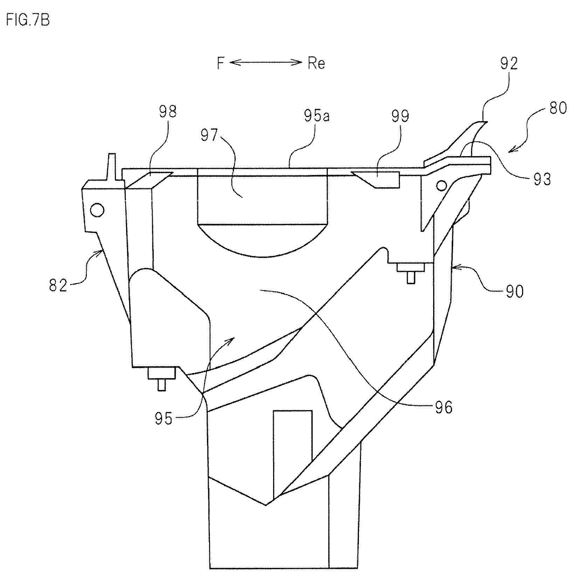

As illustrated in Fig. 7B, the rear wall 90 has a flange portion 92 extending rearward and obliquely upward. The flange portion 92 forms at least a portion of the upper portion of the rear wall 90. The flange portion 92 is inclined with respect to the vertical so as to slope upward toward the rear. As illustrated in Fig. 8, the uppermost end 91d of the rear wall 90 is positioned higher than the uppermost end 85b of the right wall 85 and the uppermost end 95b of the left wall 95. In the present embodiment, the uppermost end 91 d of the rear wall 90 is also the uppermost end 91 d of the flange portion 92. The upper edge 90a of the rear wall 90 is formed so as to slope downward from the uppermost end 91 d of the rear wall 90 toward the uppermost end 85b of the right wall 85 and the uppermost end 95b of the left wall 95. As illustrated in Fig. 2, at least a portion of the flange portion 92 is disposed more rearward than the respective frontmost ends 64aa and 64bb of the leftward and rightward positioned portions 64a and 64b, which are respectively positioned vehicle-widthwise leftward and rightward of the recessed portion 66. As illustrated in Fig. 2, at least a portion of the flange portion 92 is disposed in the recessed portion 66, and it overlaps the fuel tank 60, as viewed in plan. As illustrated in Fig. 3B, the leftward positioned portion 64a and the rightward positioned portion 64b of the front end portion 64 of the fuel tank 60 overlap a portion of the flange portion 92 of the rear wall 90, as viewed from one side of the vehicle.

As illustrated in Fig. 7A, the storage box 80 has a seat load bearing portion 93 extending rearward from the rear wall 90. The seat load bearing portion 93 supports the load applied from the seat 50 when the seat 50 is closed. As illustrated in Fig. 7B, the seat load bearing portion 93 is disposed at a position higher than the upper edge 95a of the left wall 95. As illustrated in Fig. 4, the seat load bearing portion 93 is disposed above the region at which the fuel tank 60 is fitted to the cross member 19a. A protruding portion 58 protruding downward from the reverse face 52 of the seat 50 is supported by the seat load bearing portion 93.

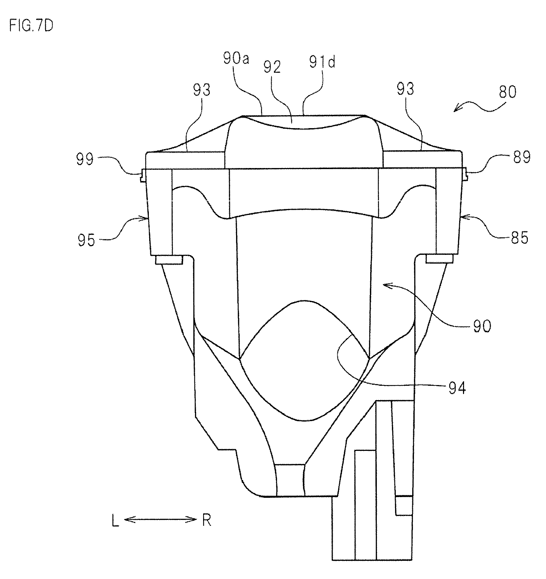

As illustrated in Fig. 7D, a recessed portion 94 recessed upward, which is positioned above a portion of the rear fender 26 (see Fig. 10), is formed in a lower portion of the rear wall 90 of the storage box 80. As illustrated in Fig. 10, a portion of the rear fender 26 is disposed in the recessed portion 94. As illustrated in Fig. 9, a portion of the rear fender 26 overlaps the storage box 80 as viewed from one side of the vehicle.

As illustrated in Fig. 7A, the storage box 80 has a first interlocking portion 88 and a second interlocking portion 89 that are connected to the right wall 85, and a first interlocking portion 98 and a second interlocking portion 99 that are connected to the left wall 95. In the present embodiment, the first interlocking portion 88 of the right wall 85 and the first interlocking portion 98 of the left wall 95 have the same shape as each other, and the second interlocking portion 89 of the right wall 85 and the second interlocking portion 99 of the left wall 95 have the same shape as each other, but the teaching is not limited to such a configuration. Hereinbelow, the first interlocking portion 88 and the second interlocking portion 89 of the right wall 85 will be described, and the description of the first interlocking portion 98 and the second interlocking portion 99 of the left wall 95 will be omitted.

As illustrated in Fig. 5A, the first interlocking portion 88 connected to the right wall 85 passes over the upper edge 32a of the vehicle body cover 32 and extends outward of the vehicle body cover 32, interlocking with the upper edge 32a of the vehicle body cover 32. The first interlocking portion 88 extends vertically downward.

As illustrated in Fig. 5C, the second interlocking portion 89 connected to the right wall 85 passes over the upper edge 32a of the vehicle body cover 32 and extends outward of the vehicle body cover 32, interlocking with the upper edge 32a of the vehicle body cover 32. The second interlocking portion 89 is inclined with respect to the vertical so as to slope downward more toward vehicle-widthwise outside. It should be noted that both the first interlocking portion 88 and the second interlocking portion 89 may extend vertically downward, or both of them may be inclined with respect to the vertical so as to slope downward more toward vehicle-widthwise outside. It is also possible that, as in the present embodiment, either one of them may extend vertically downward, and the other one may be inclined with respect to the vertical so as to slope downward more toward vehicle-widthwise outside.

As illustrated in Fig. 7A, the first interlocking portion 88 is formed in the front-half portion 81 a of the storage box 80. The second interlocking portion 89 is formed behind the first interlocking portion 88. The second interlocking portion 89 is a separate portion from the first interlocking portion 88, and the second interlocking portion 89 is not connected to the first interlocking portion 88. In the present embodiment, the second interlocking portion 89 is formed in a rear-half portion 81 b of the storage box 80. The first interlocking portion 88 and the second interlocking portion 89 are formed in the right wall main portion 86, positioned respectively in front of and behind the right wall bulging portion 87. The first interlocking portion 98 and the second interlocking portion 99 are formed in the left wall main portion 96, positioned respectively in front of and behind the left wall bulging portion 97. As illustrated in Fig. 2, the middle position 51, which is between the frontmost end 50a of the seat 50 and the portion of the seat 50 at which its width is greatest, is located behind the first interlocking portions 88 and 98 and in front of the second interlocking portions 89 and 99. The first interlocking portion 88 is formed on the linear line connecting the footrest 36a and the middle position 51 with each other, as viewed in plan. The first interlocking portion 98 is formed on the linear line connecting the footrest 36b and the middle position 51 with each other, as viewed in plan. The second interlocking portion 89 is formed more frontward than the rightmost end 50c of the seat 50. The second interlocking portion 99 is formed more frontward than the rightmost end 50c of the seat 50.

As illustrated in Fig. 3A, an indented portion 54 recessed upward is formed in a region of the reverse face 52 of the seat 50 that faces the rear wall 90 and the recessed portion 66. The indented portion 54 in the present embodiment is a stepped portion that is formed by the reverse face 52 of the seat 50 located in front of the recessed portion 66 so as to be recessed upward. The indented portion 54 is positioned higher than the reverse face 52 of the seat 50 that is disposed above the front-half portion of the storage box 80, and the region in which the indented portion 54 is formed has a wider clearance from the storage box 80 than the region in which the indented portion 54 is not formed. Since the indented portion 54 is formed in the reverse face 52 of the seat 50 in this way, sufficient storage space can be ensured in front of the recessed portion 66. Within the reverse face 52 of the seat 50, an indented portion 56 that is recessed further upward than the indented portion 54 is formed behind the indented portion 54 and above the recessed portion 66 of the fuel tank 60. A gap is provided between the indented portion 56 and the recessed portion 66. Since the indented portion 56 is formed in the reverse face 52 of the seat 50 in this way, sufficient storage space can be ensured in a region above the recessed portion 66.

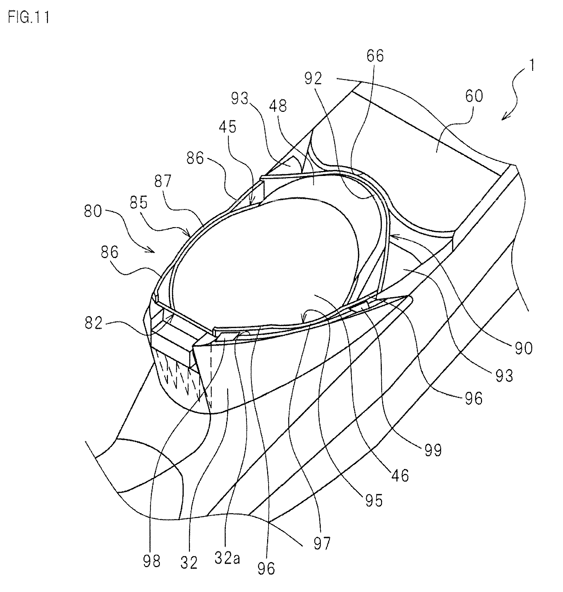

As illustrated in Fig. 11, in the storage box 80 of the present embodiment, the left wall 95 has the left wall bulging portion 97, which has a greater curvature in horizontal cross-section than the left wall main portion 96, and the right wall 85 has the right wall bulging portion 87, which has a greater curvature in horizontal cross-section than the right wall main portion 86. As a result, the volumetric capacity of the storage box 80 is made large. This enables the storage box 80 to accommodate a helmet 45, for example. An example of the helmet 45 is an open-face type helmet provided with a peak 48 on a shell portion 46. As illustrated in Fig. 3A, in the present embodiment, the helmet 45 can be accommodated in the storage box 80 in such a posture that a top portion 47 of the shell portion 46 of the helmet 45 faces downward and the peak 48 of the helmet 45 faces rearward. The peak 48 of the helmet 45 is placed along the flange portion 92 of the rear wall 90. As illustrated in Fig. 2, at least a portion of the peak 48 of the helmet 45 overlaps the recessed portion 66 of the fuel tank 60 as viewed in plan. In other words, at least a portion of the peak 48 of the helmet 45 is placed above the recessed portion 66 of the fuel tank 60. As illustrated in Fig. 3B, the leftward positioned portion 64a and the rightward positioned portion 64b of the front end portion 64 of the fuel tank 60 overlap a portion of the peak 48 of helmet 45, as viewed from one side of the vehicle.

### <SECOND EMBODIMENT>

In the foregoing embodiment, the upper edge 90a of the rear wall 90 of the storage box 80 is formed in a circular arc shape as viewed in plan, but the teaching is not limited to such an embodiment. Hereinbelow, a storage box 180 according to a second embodiment will be described.

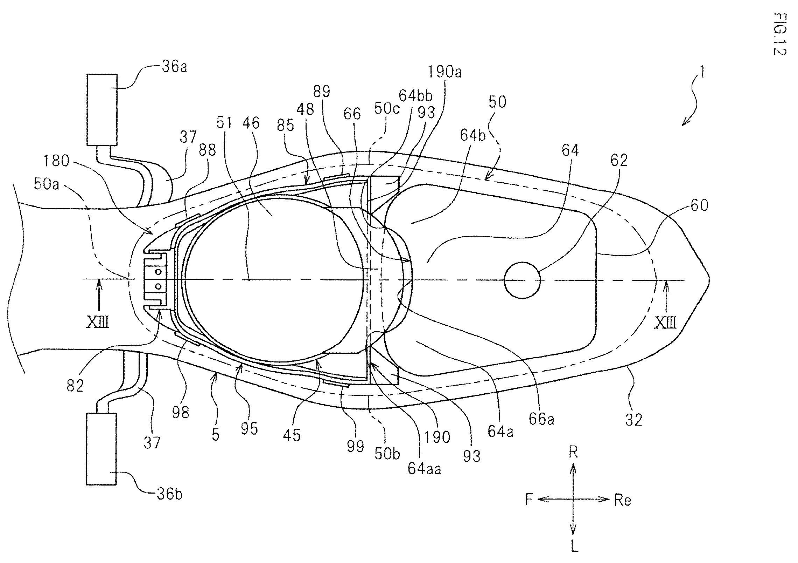

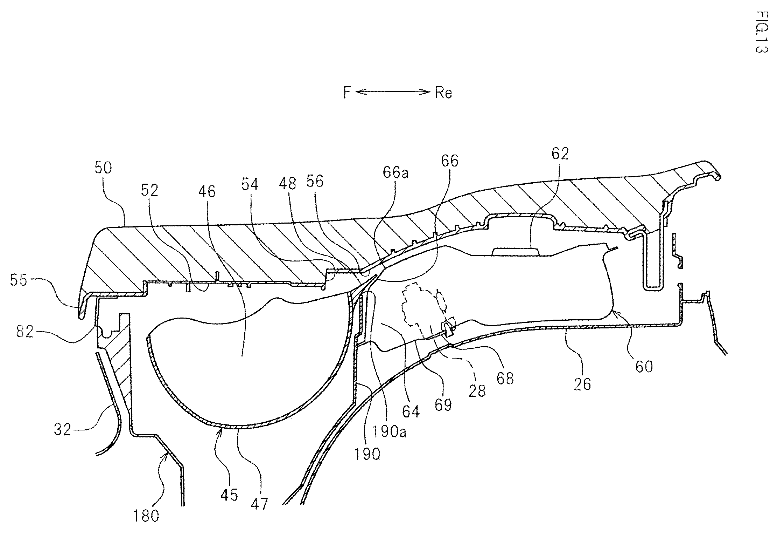

As illustrated in Fig. 12, an upper edge 190a of a rear wall 190 of the storage box 180 according to the present embodiment is formed in a linear shape as viewed in plan. The upper edge 190a extends horizontally (in a vehicle width direction) as viewed in plan. As illustrated in Fig. 13, the storage box 180 has a volumetric capacity that can accommodate the helmet 45 or the like. In the present embodiment, the helmet 45 can be accommodated in the storage box 180 in such a posture that the top portion 47 of the shell portion 46 of the helmet 45 faces downward and the peak 48 of the helmet 45 faces rearward. A portion of the peak 48 of the helmet 45 is placed at the rear of the storage box 180 over the upper edge 190a of the rear wall 190. As illustrated in Fig. 12, at least a portion of the peak 48 of the helmet 45 overlaps the recessed portion 66 of the fuel tank 60 as viewed in plan. In other words, at least a portion of the peak 48 of the helmet 45 is disposed above the recessed portion 66 of the fuel tank 60. The rest of the configuration is substantially the same as the configuration in the first embodiment.

In the motorcycle 1 according to the embodiments, the rightmost and leftmost ends 91 a and 91 b of the rear wall 90 of the storage box 80 are respectively positioned more outward than the rightmost and leftmost ends 83a and 83b of the front wall 82, as described previously. For this reason, in a vehicle-widthwise central region, the distance from the front wall 82 to the rear wall 90 of the storage box 80 is shorter than that in the other portions of the storage box 80. Nevertheless, since the recessed portion 66 recessed rearward is formed in a vehicle-widthwise central region of the front end portion 64 of the fuel tank 60, which is disposed behind the storage box 80, the storage space is increased corresponding to the space of the recessed portion 66. Moreover, the respective frontmost ends 64aa and 64bb of the leftward positioned portion 64a and the rightward positioned portion 64b that are positioned respectively vehicle-widthwise leftward and rightward of the recessed portion 66 are positioned more frontward than the rearmost end 66a of the recessed portion 66. Therefore, the fuel tank 60 can be ensured to have a sufficient capacity even though the recessed portion 66 is formed in the fuel tank 60. As described above, the underbone type motorcycle 1 according to the embodiments can effectively increase the storage space below the seat 50 while inhibiting the capacity of the fuel tank 60 from decreasing.

In the embodiments, the rearmost end 91c of the rear wall 90 is disposed more rearward than the rearmost end 86b of the right wall 85 and the rearmost end 96b of the left wall 95, and is also disposed more rearward than the respective frontmost ends 64aa and 64bb of the leftward and rightward positioned portions 64a and 64b of the fuel tank 60, which are respectively positioned vehicle-widthwise leftward and rightward of the recessed portion 66. Thereby, the volumetric capacity of the storage box 80 can be made larger without increasing the size of the motorcycle 1.

In the embodiments, the upper edge 90a of the rear wall 90 is formed in a circular arc shape as viewed in plan, and the rearmost end 91c of the rear wall 90 is disposed more rearward than the rearmost end 86b of the right wall 85 and the rearmost end 96b of the left wall 95, and is also disposed more rearward than the respective frontmost ends 64aa and 64bb of the leftward and the rightward positioned portions 64a and 64b, which are respectively positioned vehicle-widthwise leftward and rightward of the recessed portion 66. Thereby, the volumetric capacity of the storage box 80 can be made larger without increasing the size of the motorcycle 1.

In the embodiments, the rear wall 90 has the flange portion 92 extending rearward and obliquely upward, the recessed portion 66 is formed in an upper portion of the front end portion 64 of the fuel tank 60, and at least a portion of the flange portion 92 is disposed more rearward than the respective frontmost ends 64aa and 64bb of the leftward and rightward positioned portions 64a and 64b, which are respectively positioned vehicle-widthwise leftward and rightward of the recessed portion 66, and it overlaps the fuel tank 60 as viewed in plan. Since the recessed portion 66 is formed in an upper portion of the front end portion 64 of the fuel tank 60 in this way, the capacity of the fuel tank 60 can be inhibited from decreasing. Moreover, since the flange portion 92 is disposed in the recessed portion 66, the items accommodated in the storage box 80 can be effectively prevented from making contact with the fuel tank 60.

In the embodiments, the flange portion 92 is inclined with respect to the vertical so as to slope upward toward the rear, and the surface of the recessed portion 66 is inclined with respect to the vertical so as to slope upward toward the rear. Since the surface of the recessed portion 66 is inclined with respect to the vertical so as to slope upward toward the rear in this way, the capacity of the fuel tank 60 can be further inhibited from decreasing.

In the embodiments, the uppermost end 91d of the rear wall 90 is positioned higher than the uppermost end 85b of the right wall 85 and the uppermost end 95b of the left wall 95, and the upper edge 90a of the rear wall 90 is formed so as to slope downward from the uppermost end 91d of the rear wall 90 toward the uppermost end 85b of the right wall 85 and the uppermost end 95b of the left wall 95. Since the upper edge 90a of the rear wall 90 is formed so as to slope downward from the uppermost end 91 d of the rear wall 90 toward the uppermost end 85b of the right wall 85 and the uppermost end 95b of the left wall 95 in this way, water can be effectively prevented from entering the storage box 80 by the rear wall 90 extending higher than the uppermost end 85b of the right wall 85 and the uppermost end 95b of the left wall 95 when water flows in from behind the storage box 80.

In the embodiments, the left wall 95 has the left wall main portion 96 and the left wall bulging portion 97, the left wall main portion 96 formed to have a horizontal cross section in a linear shape or in a leftward convex curved shape, and the left wall bulging portion 97 provided more rearward than the frontmost end 96a of the left wall main portion 96 and more frontward than the rearmost end 96b thereof and formed to have a horizontal cross section in a leftward convex curved shape having a greater curvature than that of the left wall main portion 96, and the right wall 85 has the right wall main portion 86 and the right wall bulging portion 87, the right wall main portion 86 formed to have a horizontal cross section in a linear shape or in a rightward convex curved shape, and the right wall bulging portion provided more rearward than the frontmost end 86a of the right wall main portion 87 and more frontward than the rearmost end 86b thereof and formed to have a horizontal cross section in a rightward convex curved shape having a greater curvature than that of the right wall main portion 86. The volumetric capacity of the storage 80 can be made larger because the left wall bulging portion 97 and the right wall bulging portion 87, which are respective portions of the left wall 95 and the right wall 85, bulge vehicle-widthwise outward in this way.

In the embodiments, the indented portion 54 recessed upward is formed in the region of the reverse face 52 of the seat 50 that faces the rear wall 90 and the recessed portion 66 of the fuel tank 60. Since the indented portion 54 is formed in the reverse face 52 of the seat 50 in this way, sufficient storage space can be provided from a region above the rear wall 90 of the storage box 80 toward a region above the recessed portion 66 of the fuel tank 60.

In the embodiments, the motorcycle 1 has the rear fender 26 disposed above a portion of the rear wheel 10, and the recessed portion 94 recessed upward and positioned above a portion of the rear fender 26 is formed in a lower portion of the rear wall 90 of the storage box 80. By disposing a portion of the rear fender 26 in the recessed portion 94 of the storage box 80, the front-to-rear length of the motorcycle 1 can be made smaller, and the size of the motorcycle 1 can be made smaller.

In the embodiments, when the helmet 45 is accommodated in the storage box 80 in such a posture that the top portion 47 of the shell portion 46 of the helmet 45 faces downward and the peak 48 of the helmet 45 faces rearward, the recessed portion 66 of the fuel tank 60 is formed so that at least a portion of the peak 48 of the helmet 45 is disposed above the recessed portion 66 as viewed in plan. Even when the storage box 80 has a volumetric capacity that can accommodate the shell portion 46 of the helmet 45 (for example, an open-face type helmet) but the whole of the helmet 45 is difficult to put in the storage box 80, the helmet 45 can be accommodated in the storage space below the seat 50 by putting the peak 48 of the helmet 45 in the recessed portion 66, because the recessed portion 66 is formed in the front end portion 64 of the fuel tank 60.

In the embodiments, the fuel pump 28 is disposed inside the fuel tank 60, and the fuel pump 28 is mounted to the lower wall 69 of the fuel tank 60. As a result, the fuel pump 28 can be disposed in a compact manner.

In the embodiments, the body frame 30 comprises the right and left seat frames 16a and 16b extending rearward and obliquely upward from the main frame 14, and the cross member 19a mounted so as to span over the right and left seat frames 16a and 16b. The seat frames 16a and 16b are provided with the bracket 17a to which the storage box is mounted. The fuel tank 60 is mounted to the cross member 19a. The bracket 17a is positioned more frontward than the portion of the cross member 19a to which the fuel tank 60 is mounted. The storage box 80 has the seat load bearing portion 93 disposed above the region at which the fuel tank 60 is fitted to the cross member 19a. In the embodiments, the storage box 80 and the fuel tank 60 are not joined together. For this reason, even though the storage box 80 and the fuel tank 60 are disposed so as to overlap as viewed in plan, the height of the storage box 80 is prevented from becoming higher and at the same time the storage box 80 is ensured to have a sufficient volumetric capacity. Moreover, the seat load bearing portion 93 can be provided in the space created by not joining the storage box 80 and the fuel tank 60 together, i.e., the space above the portion of the cross member 19a to which the fuel tank 60 is fitted. As a result, the load to the storage box 80 from the seat 50 can be distributed while at the same time the storage box 80 and the fuel tank 60 can be disposed in a compact manner.

### REFERENCE SIGNS LIST

1 -- Motorcycle
10 -- Rear wheel
14 -- Main frame
26 -- Rear fender
28 -- Fuel pump
30 -- Body frame
40 -- Engine
45 -- Helmet
48 -- Peak
50 -- Seat
60 -- Fuel tank
64 -- Front end portion
64a -- Leftward positioned portion
64b -- Rightward positioned portion
66 -- Recessed portion
69 -- Lower wall
80 -- Storage box
82 -- Front wall
85 -- Right wall
86 -- Right wall main portion
87 -- Right wall bulging portion
90 -- Rear wall
92 -- Flange portion
93 -- Seat load bearing portion
94 -- Recessed portion
95 -- Left wall
96 -- Left wall main portion
97 -- Left wall bulging portion
100 -- Opening

## Claims

1. A motorcycle comprising:
a head pipe (12);
a body frame (30) having a main frame (14) extending rearward and obliquely downward from the head pipe (12);
an engine (40) supported non-swingably by the main frame (14) and disposed below the main frame (14);
a seat (50) supported by the body frame (30);
a storage box (80), at least a portion of which is disposed between the seat (50) and the main frame (14);
a fuel tank (60) disposed below the seat (50) and behind the storage box (80); and
a rear wheel (10) disposed below the fuel tank (60), wherein:
the storage box (80) has a front wall (82), a right wall (85) extending rearward from a rightmost end of the front wall (82), a left wall (95) extending rearward from a leftmost end of the front wall (82), and a rear wall (90) connecting the right wall (85) and the left wall (95) to each other;
the storage box (80) has an opening (100) formed by an upper edge of the front wall (82), an upper edge of the right wall (85), an upper edge of the rear wall (90), and an upper edge of the left wall (95);
the storage box (80) is adapted to accommodate a helmet (45);
a rightmost end of the rear wall (90) is positioned more rightward than the rightmost end of the front wall (82);
a leftmost end of the rear wall (90) is positioned more leftward than the leftmost end of the front wall (82);
at least a portion of a front end portion (64) of the fuel tank (60) is positioned higher than at least a portion of the rear wall (90);
the front end portion (64) of the fuel tank (60) has a recessed portion (66) recessed rearward in a vehicle-widthwise central region; and
the front end portion (64) of the fuel tank (60) includes a leftward positioned portion (64a) and a rightward positioned portion (64b) having respective frontmost ends (64aa, 64bb) and respectively positioned vehicle-widthwise leftward and rightward of the recessed portion (66), and the respective frontmost ends (64aa, 64bb) of the leftward and rightward positioned portions (64a,64b) are positioned more frontward than a rearmost end (66a) of the recessed portion (66), the front edge of a lower portion of the fuel tank (60) disposed below the recessed portion (66) is positioned forward relative to the recessed portion (66) in a tank-widthwise central region, **characterized in that** said leftward positioned portion (64a) and said rightward positioned portion (64b) of the front end portion (64) of the fuel tank (60) overlap the recessed portion (66) in side view of the motorcycle, wherein the recessed portion (66) of the fuel tank (60) is formed so that at least a portion of a peak (48) of the helmet (45) is adapted to be disposed above the recessed portion (66) as viewed in plan, when the helmet (45) is accommodated in the storage box (80) in such a posture that a top portion (47) of a shell portion (46) of the helmet (45) faces downward and the peak (48) of the helmet (45) faces rearward.

2. A motorcycle according to claim 1, **characterized in that** the rearmost end of the rear wall (90) is disposed more rearward than the rearmost end of the right wall (85) and the rearmost end of the left wall (95), and more rearward than the respective frontmost ends (64aa, 64bb) of the leftward and rightward positioned portions (64a,64b) respectively positioned vehicle-widthwise leftward and rightward of the recessed portion (66).

3. A motorcycle according to claim 1 or 2, **characterized in that** the upper edge of the rear wall (90) is formed in a circular arc shape as viewed in plan.

4. A motorcycle according to at least one of the claims 1 to 3, **characterized in that** the rear wall (90) has a flange portion (92) extending rearward and obliquely upward;
the recessed portion (66) is formed in an upper portion of the front end portion (64) of the fuel tank (60); and
at least a portion of the flange portion (92) is disposed more rearward than the respective frontmost ends (64aa, 64bb) of the leftward and rightward positioned portions (64a,64b) respectively positioned vehicle-widthwise leftward and rightward of the recessed portion (66), and overlaps the fuel tank (60) as viewed in plan.

5. A motorcycle according to claim 4, **characterized in that** the flange portion (92) is inclined with respect to the vertical so as to slope upward toward the rear; and a surface of the recessed portion (66) is inclined with respect to the vertical so as to slope upward toward the rear.

6. A motorcycle according to at least one of the claims 1 to 5, **characterized in that** an uppermost end of the rear wall (90) is positioned higher than an uppermost end of the right wall (85) and an uppermost end of the left wall (95); and
the upper edge of the rear wall (90) is formed so as to slope downward from the uppermost end of the rear wall (90) toward the uppermost end of the right wall (85) and the uppermost end of the left wall (95).

7. A motorcycle according to at least one of the claims 1 to 6, **characterized in that** the left wall (95) has a left wall main portion (96) and a left wall bulging portion (97), the left wall main portion (96) formed to have a horizontal cross section in a linear shape or in a leftward convex curved shape, and the left wall bulging portion (97) provided more rearward than a frontmost end of the left wall main portion (96) and more frontward than a rearmost end thereof and formed to have a horizontal cross section in a leftward convex curved shape having a greater curvature than that of the left wall main portion (96); and
the right wall (85) has a right wall main portion (86) and a right wall bulging portion (87), the right wall main portion (86) formed to have a horizontal cross section in a linear shape or in a rightward convex curved shape, and the right wall bulging portion (87) provided more rearward than a frontmost end of the right wall main portion (86) and more frontward than a rearmost end thereof and formed to have a horizontal cross section in a rightward convex curved shape having a greater curvature than that of the right wall main portion (86).

8. A motorcycle according to at least one of the claims 1 to 7, **characterized in that** an indented portion (54) recessed upward is formed in a region of a reverse face of the seat (50) that faces the rear wall (90) and the recessed portion (66).

9. A motorcycle according to at least one of the claims 1 to 8, **characterized by** a rear fender (26) disposed above a portion of the rear wheel (10), wherein
a recessed portion (94) recessed upward and positioned above a portion of the rear fender (26) is formed in a lower portion of the rear wall (90) of the storage box (80).

10. A motorcycle according to at least one of the claims 1 to 9, **characterized by** a fuel pump (28) disposed in the fuel tank (60), wherein
the fuel pump (28) is mounted to a lower wall of the fuel tank (60).

11. A motorcycle according to at least one of the claims 1 to 10, **characterized in that** the body frame (30) comprises right and left seat frames (16a,16b) extending rearward and obliquely upward from the main frame (14), and a cross member (19a) mounted so as to span over the right and left seat frames (16a,16b);
the seat frames (16a,16b) are provided with a first mount portion (17a) to which the storage box (80) is mounted;
the cross member (19a) is provided with a second mount portion to which the fuel tank (60) is mounted;
the first mount portion (17a) is positioned more frontward than the second mount portion; and
the storage box (80) has a seat load bearing portion (93) provided above the second mount portion.

## Patentansprüche

1. Ein Motorrad, das umfasst:
ein Kopf-Rohr (12);
einen Körper-Rahmen (30), der einen Haupt-Rahmen (14) hat, der sich nach hinten und schräg nach unten von dem Kopf-Rohr (12) erstreckt;
einen Motor (40), nicht schwingend gelagert durch den Haupt-Rahmen (14) und unterhalb des Haupt-Rahmens (14) positioniert;
einen Sitz (50), gelagert durch den Körper-Rahmen (30);
eine Stau-Box (80), zumindest ein Abschnitt derselben ist zwischen dem Sitz (50) und dem Haupt-Rahmen (14) positioniert;
einen Kraftstoff-Tank (60), positioniert unter dem Sitz (50) und hinter der Stau-Box (80); und
ein Hinter-Rad (10), positioniert unter dem Kraftstoff-Tank (60), wobei:
die Stau-Box (80) eine vordere Wand (82), eine rechte Wand (85), die sich nach hinten von dem am weitesten rechts liegenden Ende der vorderen Wand (82) erstreckt, eine linke Wand (95), die sich nach hinten von dem am weitesten links liegenden Ende der vorderen Wand (62) erstreckt, und eine hintere Wand (90), welche die rechte Wand (85) und die linke Wand (95) miteinander verbindet, hat; die Stau-Box (80) hat eine Öffnung (100), ausgebildet durch eine obere Kante der vorderen Wand (82), eine obere Kante der rechten Wand (85), eine obere Kante der hinteren Wand (90) und eine obere Kante der linken Wand (95);
die Stau-Box (80) ist angepasst, um einen Helm (45) aufzunehmen;
ein am weitesten rechts liegendes Ende der hinteren Wand (90) ist weiter rechts positioniert als das am weitesten rechts liegende Ende der vorderen Wand (82);
ein am weitesten links liegendes Ende der hinteren Wand (90) ist weiter links positioniert als das am weitesten links liegende Ende der vorderen Wand (82);
zumindest ein Abschnitt eines vorderen Endabschnitts (64) des Kraftstoff-Tanks (60) ist höher positioniert als zumindest ein Abschnitt der hinteren Wand (90);
der vordere Endabschnitt (64) des Kraftstoff-Tanks (60) hat einen ausgenommenen Abschnitt (66), ausgenommen nach hinten in einem Fahrzeug-Breiten-Zentralbereich; und
der vordere Endabschnitt (64) des Kraftstoff-Tanks (60) beinhaltet einen links positionierten Abschnitt (64a) und einen rechts positionierten Abschnitt (64b), die jeweils am weitesten vorne liegende Enden (64aa, 64bb) haben und die jeweils in Fahrzeug-Breite links und rechts von dem ausgenommenen Abschnitt (66) positioniert sind, und die jeweiligen weitesten vorne liegenden Enden (64aa, 64bb) der links und rechts positionierten Abschnitte (64a, 64b) sind weiter vorne positioniert als ein am weitesten hinten liegendes Ende (66a) des ausgenommenen Abschnitts (66), die vordere Kante eines unteren Abschnitts des Kraftstoff-Tanks (60), positioniert unterhalb des ausgenommenen Abschnitts (66), ist nach vorne, relativ zu dem ausgenommenen Abschnitt (66) in einem Tank-Breiten-Zentralbereich positioniert, **dadurch gekennzeichnet, dass** dieser links positionierte Abschnitt (64a) und dieser rechts positionierte Abschnitt (64b) des vorderen Endabschnitts (64) des Kraftstoff-Tanks (60) den ausgenommen Abschnitt (66) in einer Seiten-Ansicht des Motorrads überlappt, wobei der ausgenommene Abschnitt (66) des Kraftstoff-Tanks (60) ausgebildet ist, so dass ein Abschnitt einer Spitze (48) des Helms (45) ausgebildet ist, um oberhalb des ausgenommenen Abschnitts (66) positioniert zu werden, wenn in einer Draufsicht betrachtet, wenn der Helm (45) in der Stau-Box (80) aufgenommen ist, in so einer Position, dass ein oberer Abschnitt (47) eines Schalen-Abschnitts (46) des Helms (45) nach unten zeigt und die Spitze (48) des Helms (45) nach hinten zeigt.

2. Ein Motorrad nach Anspruch 1, **dadurch gekennzeichnet, dass** das am weitesten hinten liegende Ende der hinteren Wand (90) weiter hinten positioniert ist als das am weitesten hinten liegende Ende der rechten Wand (85) und das am weitesten hinten liegende Ende der linken Wand (95), und weiter hinten als das jeweilige am weitesten vorne liegende Ende (64aa, 64bb) von den links und rechts positionierten Abschnitten (64a, 64b), jeweils positioniert in Fahrzeug-Breiten-Links- und Rechts-Richtung von dem ausgenommenen Abschnitt (66).

3. Ein Motorrad gemäß Anspruch 1 oder 2, **dadurch gekennzeichnet, dass** die obere Kante der hinteren Wand (90) in einer Kreisbogenform ausgebildet ist, wenn in Draufsicht betrachtet.

4. Ein Motorrad gemäß irgendeinem der Ansprüche 1 bis 3, **dadurch gekennzeichnet, dass** die hintere Wand einen Flanschabschnitt (92) hat, der sich nach hinten und schräg unten erstreckt; der ausgenommene Abschnitt (66) ist in einem oberen Abschnitt des vorderen Endabschnitt (64) des Kraftstoff-Tanks (60) ausgebildet; und zumindest ein Abschnitt des Flanschabschnitts (92) ist weiter hinten positioniert als das jeweilige am weitesten vorne liegende Ende (64aa, 64bb) von dem links und rechts positionierten Abschnitten (64a, 64b) jeweils positioniert in Fahrzeug-Breiten-Links- und Rechts-Richtung von dem ausgenommenen Abschnitt (66) und überlappt den Tank (60), wenn in Draufsicht betrachtet.

5. Ein Motorrad gemäß Anspruch 4, **dadurch gekennzeichnet, dass** der Flanschabschnitt (92) mit Bezug auf die Vertikale geneigt ist, so dass dieser nach oben ansteigt, nach hinten, und eine Fläche des ausgenommenen Abschnitts (66) ist mit Bezug auf die Vertikale geneigt, so dass diese unten abfällt, nach hinten.

6. Ein Motorrad gemäß zumindest einem der Ansprüche 1 bis 5, **dadurch gekennzeichnet, dass** ein am weitesten oben liegendes Ende der hinteren Wand (90) höher positioniert ist als ein am weitest oben liegende Ende von der rechten Wand (85) und ein am weitesten oben liegendes Ende von der linken Wand (95); und die obere Kante der hinteren Wand (90) ist so ausgebildet, dass diese nach unten von dem am weitesten oben liegenden Ende der hinteren Wand (90) zu dem am weitesten oben liegenden Ende der rechten Wand (85) und dem am weitesten oben liegenden Ende der linken Wand (95) abfällt.

7. Ein Motorrad gemäß zumindest einem der Ansprüche 1 bis 6, **dadurch gekennzeichnet, dass** die linke Wand (95) einen linken Wand-Hauptabschnitt (96) und einen linken Wand-Bauchabschnitt (97) hat, der linke Wand-Hauptabschnitt (96) ist ausgebildet, um einen horizontalen Querschnitt in einer linearen Form oder in einer nach links gerichteten konvex gekrümmten Form zu haben, und der linke Wand-Bauchabschnitt (97) ist weiter hinten vorgesehen als ein am weitesten vorne liegendes Ende des linken Wand-Hauptabschnitts 96 und weiter vorne als ein am weitesten hinten liegendes Ende desselben und ausgebildet, um einen horizontalen Querschnitt zu haben in einer links gerichteten konvex gekrümmten Form, die einen größeren Krümmungsradius hat als die des linken Wand-Hauptabschnitts (96); und der rechte Wandabschnitt (85) hat einen rechten Wand-Hauptabschnitt (86) und einen rechten Wand-Bauchabschnitt (87), der rechte Wand-Hauptabschnitt (86) ist ausgebildet, um einen horizontalen Querschnitt in einer linearen Form oder in einer rechts gerichteten konvex gekrümmten Form zu haben, und der rechte Wand-Bauchabschnitt (87) ist weiter hinten vorgesehen als ein am weitesten vorne liegendes Ende des rechten Wand-Hauptabschnitts (86) und weiter vorne als ein am weitesten hinten liegendes Ende desselben und ausgebildet, um einen horizontalen Querschnitt zu haben in einer rechts gerichteten konvex gekrümmten Form, die einen größeren Krümmungsradius hat als der des rechten Wand-Hauptabschnitts (86).

8. Ein Motorrad gemäß irgendeinem der Ansprüche 1 bis 7, **dadurch gekennzeichnet, dass** ein eingrückter Abschnitt (54), ausgenommen nach oben in einem Bereich einer Unterfläche des Sitz (50), ausgebildet ist, welche der hinteren Wand (90) und dem ausgenommenen Abschnitt (66) gegenüberliegt.

9. Ein Motorrad gemäß zumindest einem der Ansprüche 1 bis 8, **gekennzeichnet durch** eine hinteres Schutzblech (26), angeordnet oberhalb eines Abschnitts des Hinter-Rads (10), wobei ein ausgenommener Abschnitt (94), ausgenommen nach oben und positioniert oberhalb eines Abschnitts des hinteren Schutzblechs (26), in einem unteren Abschnitt der hinteren Wand (90) der Stau-Box (80) ausgebildet ist.

10. Ein Motorrad gemäß zumindest einem der Ansprüche 1 bis 9, **gekennzeichnet durch** eine Kraftstoff-Pumpe (28), positioniert in dem Kraftstoff-Tank (60), wobei die Kraftstoff-Pumpe (28) an einer unteren Wand des Kraftstoff-Tanks (60) montiert ist.

11. Ein Motorrad gemäß zumindest einem der Ansprüche 1 bis 10, **dadurch gekennzeichnet, dass** der Körper-Rahmen (30) rechte und linke Sitz-Rahmen (16a, 16b), die sich nach hinten und schräg nach oben von dem Haupt-Rahmen (14) erstrecken, und ein Quer-Element (19a) montiert, so dass es über die rechten und linken Sitz-Rahmen (16a, 16b) umspannt, umfasst;
die Sitz-Rahmen (16a, 16b) sind mit einem ersten Montageabschnitt (17a), an dem die Stau-Box (80) montiert ist, vorgesehen;
das Quer-Element (19a) ist mit einem zweiten Montageabschnitt, an dem der Kraftstoff-Tank (60) montiert ist, vorgesehen;
der erste Montageabschnitt (17a) ist weiter vorne positioniert als der zweite Montageabschnitt; und
die Stau-Box (80) hat ein Sitz-Belastungs-Lagerabschnitt (93), vorgesehen oberhalb des zweiten Montageabschnitts.

## Revendications

1. Motocyclette comprenant :
un tube de tête (12) ;
un châssis de carrosserie (30) comportant un châssis principal (14) s'étendant vers l'arrière et obliquement vers le bas par rapport au tube de tête (12) ;
un moteur (40) supporté non pivotant par le châssis principal (14) et disposé en dessous du châssis principal (14) ;
un siège (50) supporté par le châssis de carrosserie (30) ;
une boîte de rangement (80), dont au moins une partie est disposée entre le siège (50) et le châssis principal (14) ;
un réservoir de carburant (60) disposé en dessous du siège (50) et derrière la boîte de rangement (80) ; et
une roue arrière (10) disposée en dessous du réservoir de carburant (60), dans laquelle :
la boîte de rangement (80) comporte une paroi avant (82), une paroi de droite (85) s'étendant vers l'arrière depuis l'extrémité la plus à droite de la paroi avant (82), une paroi de gauche (95) s'étendant vers l'arrière depuis l'extrémité la plus à gauche de la paroi avant (82) et une paroi arrière (90) reliant l'une à l'autre la paroi de droite (85) et la paroi de gauche (95) ;
la boîte de rangement (80) comporte une ouverture (100) formée par le bord supérieur de la paroi avant (82), le bord supérieur de la paroi de droite (85), le bord supérieur de la paroi arrière (90) et le bord supérieur de la paroi de gauche (95) ;
la boîte de rangement (80) est adaptée à contenir un casque (45) ;
l'extrémité la plus à droite de la paroi arrière (90) est positionnée plus vers la droite que l'extrémité la plus à droite de la paroi avant (82) ;
l'extrémité la plus à gauche de la paroi arrière (90) est positionnée plus vers la gauche que l'extrémité la plus à gauche de la paroi avant (82) ;
au moins une partie d'une partie d'extrémité avant (64) du réservoir de carburant (60) est positionnée plus haute qu'au moins une partie de la paroi arrière (90) ;
la partie d'extrémité avant (64) du réservoir de carburant (60) comporte une partie en retrait (66) en retrait vers l'arrière dans la région centrale dans le sens de la largeur du véhicule ; et
la partie d'extrémité avant (64) du réservoir de carburant (60) comporte une partie positionnée vers la gauche (64a) et une partie positionnée vers la droite (64b) ayant des extrémités respectives les plus en avant (64aa, 64bb) et positionnées respectivement vers la gauche et vers la droite dans le sens de la largeur du véhicule de la partie en retrait (66) et les extrémités respectives les plus en avant (64aa, 64bb) des parties positionnées vers la gauche et vers la droite (64a, 64b) sont positionnées plus vers l'avant que l'extrémité la plus en arrière (66a) de la partie en retrait (66), le bord avant de la partie inférieure du réservoir de carburant (60) disposée en dessous de la partie en retrait (66) est positionné vers l'avant par rapport à la partie en retrait (66) dans la région centrale dans le sens de la largeur du réservoir,
**caractérisée en ce que** ladite partie positionnée vers la gauche (64a) et ladite partie positionnée vers la droite (64b) de la partie d'extrémité avant (64) du réservoir de carburant (60) est superposée à la partie en retrait (66) vue de côté de la motocyclette, dans laquelle la partie en retrait (66) du réservoir de carburant (60) est formée de sorte qu'au moins une partie de la visière (48) du casque (45) est adaptée à être disposée au-dessus de la partie en retrait (66), vue en plan, lorsque le casque (45) et reçu dans la boîte de rangement (80) dans une posture telle que la partie supérieure (47) de la partie de coque (46) du casque (45) est tournée vers le bas et la visière (48) du casque (45) est tournée vers l'arrière.

2. Motocyclette selon la revendication 1, **caractérisée en ce que** l'extrémité la plus en arrière de la paroi arrière (90) est disposée plus vers l'arrière que l'extrémité la plus en arrière de la paroi de droite (85) et l'extrémité la plus en arrière de la paroi de gauche (95), et plus vers l'arrière que les extrémités les plus en avant respectives (64aa, 64bb) des parties positionnées vers la gauche et vers la droite (64a, 64b) respectivement positionnées vers la gauche et vers la droite dans le sens de la largeur du véhicule de la partie en retrait (66).

3. Motocyclette selon la revendication 1 ou 2, **caractérisée en ce que** le bord supérieur de la paroi arrière (90) est conformée sous forme d'arc de cercle, vue en plan.

4. Motocyclette selon au moins une des revendications 1 à 3, **caractérisée en ce que** la paroi arrière (90) comporte une partie de bride (92) s'étendant vers l'arrière et obliquement vers le haut ;
la partie en retrait (66) est formée dans la partie supérieure de la partie d'extrémité avant (64) du réservoir de carburant (60) ; et
au moins une partie de la partie de bride (92) est disposée plus vers l'arrière que les extrémités les plus en avant respectives (64aa, 64bb) des parties positionnées vers la gauche et vers la droite (64a, 64b) respectivement positionnées vers la gauche et vers la droite dans le sens de la largeur du véhicule de la partie en retrait (66), et recouvre le réservoir de carburant (60) vue en plan.

5. Motocyclette selon la revendication 4, **caractérisée en ce que** la partie de bride (92) est inclinée par rapport à la verticale de façon à être inclinée vers le haut vers l'arrière ; et
la surface de la partie en retrait (66) est inclinée par rapport à la verticale de façon à être inclinée vers le haut vers l'arrière.

6. Motocyclette selon au moins une des revendications 1 à 5, **caractérisée en ce que** l'extrémité la plus haute de la paroi arrière (90) est positionnée plus haute que l'extrémité la plus haute de la paroi de droite (85) et l'extrémité la plus haute de la paroi de gauche (95) ; et
le bord supérieur de la paroi arrière (90) est formé de façon à être incliné vers le bas par rapport à l'extrémité la plus haute de la paroi arrière (90) vers l'extrémité la plus haute de la paroi de droite (85) et l'extrémité la plus haute de la paroi de gauche (95).

7. Motocyclette selon au moins une des revendications 1 à 6, **caractérisée en ce que** la paroi de gauche (95) comporte une partie principale de paroi de gauche (96) et une partie renflée de paroi de gauche (97), la partie principale de paroi de gauche (96) étant formée de manière à avoir une section horizontale sous forme linéaire ou sous forme incurvée convexe vers la gauche et la partie renflée de paroi de gauche (97) étant disposée plus vers l'arrière que l'extrémité la plus en avant de la partie principale de la paroi de gauche (96) et plus vers l'avant que son extrémité la plus en arrière, et formée de manière à avoir une section horizontale de forme incurvée convexe vers la gauche ayant une plus grande courbure que celle de la partie principale de la paroi de gauche (96) ; et
la paroi de droite (85) comporte une partie principale de paroi de droite (86) et une partie renflée de paroi de droite (87), la partie principale de paroi de droite (86) étant formée de manière à avoir une section horizontale de forme linéaire ou de forme incurvée convexe vers la droite, et la partie renflée de paroi de droite (87) étant disposée plus vers l'arrière que l'extrémité la plus en avant de la partie principale de la paroi de droite (86) et plus vers l'avant que son extrémité la plus en arrière, et formée de manière à avoir une section horizontale de forme incurvée convexe vers la droite ayant une plus grande courbure que celle de la partie principale de la paroi de droite (86).

8. Motocyclette selon au moins une des revendications 1 à 7, **caractérisée en ce qu'**une partie indentée (54) en retrait vers le haut est formée dans une région de la face opposée du siège (50) tournée vers la paroi arrière (90) et la partie en retrait (66).

9. Motocyclette selon au moins une des revendications 1 à 8, **caractérisée par** un garde-boue arrière (26) disposé au-dessus d'une partie de la roue arrière (10), dans laquelle
une partie en retrait (94) en retrait vers le haut est positionnée au-dessus d'une partie du garde-boue arrière (26), et formée dans la partie inférieure de la paroi arrière (90) de la boîte de rangement (80).

10. Motocyclette selon au moins une des revendications 1 à 9, **caractérisée par** une pompe de carburant (28) disposée dans le réservoir de carburant (60), dans laquelle
la pompe de carburant (28) est montée sur la paroi inférieure du réservoir de carburant (60).

11. Motocyclette selon au moins une des revendications 1 à 10, **caractérisée en ce que**
le châssis de carrosserie (30) comprend des châssis de siège droit et gauche (16a, 16b) s'étendant vers l'arrière et obliquement vers le haut depuis le châssis principal (14), et un élément transversal (19a) monté de façon à s'étendre au-dessus des châssis de siège droit et gauche (16a, 16b) ;
les châssis de siège (16a, 16b) sont munis d'une première partie de montage (17a) sur laquelle est montée la boîte de rangement (80) ;
l'élément transversal (19a) est muni d'une seconde partie de montage sur laquelle est monté le réservoir de carburant (60) ;
la première partie de montage (17a) est positionnée plus vers l'avant que la seconde partie de montage ; et
la boîte de rangement (80) comporte une partie support de charge de siège (93) prévue au-dessus de la seconde partie de montage.
